# FASCICULE DE BREVET EUROPEEN

(11) **EP 3 552 885 B1**
(45) Date de publication et mention de la délivrance du brevet: **02.12.2020**
(21) Numéro de dépôt: 19168040.4
(22) Date de dépôt: 09.04.2019
(51) Int. Cl.: B60R 13/02, F16B 5/06

(54) **COMPOSANT COMPOSITE POUR UN VÉHICULE AUTOMOBILE**
VERBUNDKOMPONENTE FÜR EIN KRAFTFAHRZEUG
COMPOSITE COMPONENT FOR A MOTOR VEHICLE

(30) Priorité: 10.04.2018 FR 1853120
(43) Date de publication de la demande: 16.10.2019
(73) Titulaire: Compagnie Plastic Omnium, 69007 Lyon (FR)
(72) Inventeur: GROVER, Pawan, Manimajra, Chandigarh (IN)
(74) Mandataire: LLR

(56) Documents cités:
- DE-A1-102009 034 584
- DE-T2- 60 014 229
- GB-A- 1 200 358
- GB-A- 2 040 350
- GB-A- 2 121 099
- US-A- 3 367 082
- US-A1- 2007 132 224

## Description

La présente invention concerne un composant composite pour un véhicule automobile.

Des éléments d'habillage formés comme des composants composites, i.e. avec plusieurs composants, sont souvent utilisés dans des véhicules automobiles tels que, par exemple, un habillage de longeron, un becquet latéral, un becquet arrière, un pare-chocs, une calandre ou des parties de ceux-ci. Les composants composites sont habituellement fabriqués dans une structure analogue à une coquille, comportant une enveloppe externe généralement peinte de la couleur de la carrosserie, et un corps de support qui est relié à l'enveloppe externe et qui permet de fixer, à l'aide d'éléments de fixation, le composant composite ainsi obtenu à une partie de véhicule.

DE 600 14 229 T2 divulgue un composant composite pour un véhicule automobile comportant une enveloppe externe et un corps de support, dans lequel un élément de positionnement et de fixation est formé dans le corps de support, lequel élément de positionnement et de fixation définit une ouverture avec une première partie d'ouverture et une seconde partie d'ouverture, dans lequel la seconde partie d'ouverture est conçue de telle sorte qu'une saillie de positionnement formée sur l'enveloppe externe peut être positionnée dans la seconde partie d'ouverture, pour y être maintenue et fixée par un bord de la seconde partie d'ouverture, dans lequel la première partie d'ouverture est formée plus grande que la seconde partie d'ouverture, et dans lequel une partie de bord est formée en se rétrécissant dans la largeur d'ouverture dans une zone de transition du bord de la première partie d'ouverture vers le bord de la seconde partie d'ouverture, pour assurer un guidage de la saillie de positionnement dans la seconde partie d'ouverture.

D'après le document WO 2016/102059 A1, on connait un becquet latéral pour un véhicule automobile, comportant un élément de becquet formant le profil extérieur et un élément de support agencé sur la face intérieure et pouvant être relié à l'élément de becquet. L'élément de becquet comporte, le long de ses côtés longitudinaux, un premier bord latéral et un second bord latéral opposé à celui-ci, dans lequel le premier bord latéral est formé au moins en partie par un repli qui forme une contredépouille avec la face intérieure, et dans lequel le second bord latéral est formé par une collerette faisant saillie à partir de la face intérieure. L'élément de support s'étend, à l'état relié, au moins en partie du premier bord latéral au second bord latéral, dans lequel l'élément de support est alors relié au premier bord latéral par complémentarité de formes avec au moins une zone d'appui sur la contredépouille, et l'élément de support est également relié au second bord latéral par le biais d'au moins une liaison par encliquetage. La liaison par encliquetage est formée par un élément d'encliquetage qui fait saillie à partir de la collerette et forme un canal avec la face intérieure, et par le biais d'un élément d'encliquetage complémentaire formé sur l'élément de support et reçu dans le canal. L'élément de becquet et l'élément de support peuvent ainsi, par insertion, être reliés l'un à l'autre dans une seule direction d'assemblage.

Même lorsque la liaison doit permettre une fabrication simple et économique par une insertion simple, il reste le problème qu'un opérateur effectuant la liaison doit travailler soigneusement pour s'assurer que l'élément d'encliquetage et l'élément d'encliquetage complémentaire s'enclenchent correctement. Par exemple, si, par inadvertance, l'opérateur n'effectue qu'une insertion partielle, le corps de support est serré et maintenu par le bord de l'enveloppe externe, qui est légèrement repliée lors de la réception du corps de support, mais pas dans le positionnement relatif prévu des deux parties. Il peut ainsi se produire un décalage indésirable, qui peut être visuellement perceptible et gênant sur le véhicule entièrement monté et qui peut nécessiter une retouche pour y remédier.

En outre, les éléments d'encliquetage ont, de manière inhérente à ces éléments, une certaine quantité de jeu et de tolérance, de telle sorte qu'il est également possible d'arriver à un léger décalage de l'élément de becquet, mais tout de même visuellement ou tactilement perceptible, même en cas d'encliquetage correctement réalisé de l'élément de becquet et de l'élément de support, en particulier lorsqu'une force est appliquée, telle que par exemple exercée par une application à la main, ce qui est insatisfaisant, en particulier pour les véhicules automobiles haut de gamme.

Il existe également le problème que la liaison entre l'élément de support et l'élément de becquet ne se fait qu'au niveau des bords alors que, par exemple, il n'y a pas de liaison au centre des éléments de telle sorte que, par exemple pour des raisons de variations de température et donc de différentes dilatations qui vont de paire entre l'élément de support et l'élément de becquet, un cliquetis gênant peut apparaître.

Afin de surmonter en particulier le dernier problème mentionné, le document DE 10 2017 007 530 A1 propose un composant composite pour un véhicule, comportant une enveloppe externe et un corps de support maintenu dans l'enveloppe externe par complémentarité de formes, dans lequel le corps de support présente une mousse élastique. La mousse du corps de support peut s'appuyer de manière souple contre l'enveloppe externe, ce qui permet d'éviter efficacement un cliquetis du corps de support dans l'enveloppe externe.

Cependant, une difficulté apparaît dans le sens où les installations de fabrication existantes, qui sont habituellement destinées à la fabrication de pièces moulées par injection, peuvent être éventuellement modernisées mais seulement avec des investissements importants pour produire des corps de support entièrement ou partiellement en mousse. De même, la souplesse inhérente à la mousse peut, dans certains cas, ne répondre que très difficilement aux exigences d'une fixation rigide et solide sur le véhicule.

Par ailleurs, les éléments composites divulgués par le présent document présentent également les problèmes résultant d'une liaison uniquement au niveau des bords de l'enveloppe externe et du corps de support, ainsi que de la nécessité d'une liaison soignée.

D'après le document FR 30 35 630 A1, on sait en outre relier un élément de style à une partie de carrosserie et le fixer dans trois directions orthogonales X, Y et Z, cet élément de style comprenant des premier et second éléments qui forment respectivement une attache dans la direction X pour fixer l'élément de style sur la partie de corps. Le premier élément coopère avec une première ouverture de blocage dans la direction Z, le second élément avec une seconde ouverture de blocage dans la direction Y.

D'après le document EP 1 442 941 A1, on sait en outre former une bande de protection ou de décoration pour la carrosserie d'un véhicule automobile avec une pince de fixation intégrée qui comprend une tête de pince reliée au reste de la pince par une bande, dans laquelle la pince de fixation coopère avec une ouverture de « trou de serrure » dans la carrosserie.

D'après le document EP 2 518 336 A1, on sait de plus fixer une peau de pare-chocs et une aile l'une avec l'autre, au moyen d'un élément de fixation introduit dans une ouverture oblongue, déplacé et guidé dans celle-ci, et l'ouverture oblongue comprenant un dispositif d'encliquetage. Le dispositif d'encliquetage est décrit sous la forme de deux butées qui rétrécissent la section transversale de l'ouverture oblongue entre une zone de réception et une zone de guidage.

La présente invention a donc pour but de fournir une pièce composite pour un véhicule automobile qui surmonte les inconvénients précités.

La présente invention a également pour but de fournir une pièce composite pour un véhicule automobile dans lequel l'enveloppe externe et le corps de support peuvent être fixés l'un par rapport à l'autre d'une manière très précise.

Un autre but de la présente invention est de fournir une pièce composite pour un véhicule automobile qui peut être fabriquée de manière simple, sûre et économique.

### Résumé de l'invention

Ces buts de la présente ainsi que d'autres sont atteints par un composant composite pour un véhicule automobile, comportant une enveloppe externe et un corps de support, dans lequel un élément de positionnement et de fixation est formé dans le corps de support et définit une ouverture comportant une première partie d'ouverture et une seconde partie d'ouverture, dans lequel l'élément de positionnement et de fixation comporte une languette qui s'étend depuis un bord latéral de la première partie d'ouverture en direction de la seconde partie d'ouverture et recouvre la première partie d'ouverture, dans lequel la seconde partie d'ouverture est conçue de telle sorte qu'une saillie de positionnement formée sur l'enveloppe externe peut être positionnée dans la seconde partie d'ouverture, pour y être maintenue et fixée par un bord de la seconde partie d'ouverture et la languette, de manière à interdire des mouvements relatifs de l'enveloppe externe et du corps de support l'un par rapport à l'autre, parallèlement au plan d'extension du corps de support ou de l'enveloppe externe dans la zone de l'élément de positionnement et de fixation, dans lequel la première partie d'ouverture est formée plus grande que la seconde partie d'ouverture, dans lequel l'élément de positionnement et de fixation est formé de telle sorte que pour positionner la saillie de positionnement dans la seconde partie d'ouverture, la saillie de positionnement peut d'abord être engagée dans la première partie d'ouverture, afin de pousser contre la languette et dévier celle-ci depuis sa position de repos, dans lequel l'élément de positionnement peut être déplacé au moyen d'un mouvement relatif de l'enveloppe externe et du corps de support en direction de la seconde partie d'ouverture, dans lequel lorsque la saillie de positionnement est complètement déplacée dans la seconde partie d'ouverture et positionnée dans celle-ci, la languette rebondit au moins partiellement de l'état dévié à la position de repos, pour pousser contre une surface latérale de l'élément de positionnement de telle sorte que l'élément de positionnement est fixé dans la position définie par la languette et le bord de la seconde partie d'ouverture, et dans lequel une partie du bord est formée rétrécie dans la largeur d'ouverture dans une zone de transition du bord de la première partie d'ouverture au bord de la seconde partie d'ouverture, pour permettre de guider la saillie de positionnement dans la seconde partie d'ouverture, dans lequel au moins un élément de pince est en outre formé sur l'enveloppe externe et est adapté pour être passé à travers une ouverture associée prévue dans le corps de support et, lors du mouvement relatif de l'enveloppe externe et du corps de support pour déplacer la saillie de positionnement de la première partie d'ouverture à la seconde partie d'ouverture, pour venir en prise avec le bord de l'ouverture d'élément de pince, de manière à pincer le corps de support entre l'élément de pince et le corps de l'enveloppe externe, de manière à interdire un mouvement relatif de l'enveloppe externe et du corps de support perpendiculairement au plan d'extension du corps de support ou de l'enveloppe externe dans la zone de l'élément de pince.

Le composant composite permet, en particulier en raison de l'élément de positionnement et de fixation prévu tel qu'indiqué, une liaison simple et légère de l'enveloppe externe et du corps de support, en plaçant ceux-ci l'un à côté de l'autre et en les insérant l'un dans l'autre. En même temps, le même élément de positionnement et de fixation permet une fixation très précise de l'enveloppe externe et du corps de support dans deux directions orthogonales (directions dans le plan de l'enveloppe ou du corps de support), la saillie de positionnement de la languette étant maintenue et fixée dans la seconde partie d'ouverture. La saillie de positionnement est ainsi maintenue sur sa périphérie latérale en quatre points (à chaque fois opposés par paire l'un à l'autre) de manière à permettre une fixation et un positionnement très précis et pratiquement sans jeu.

L'élément de positionnement et de fixation peut être prévu en une position presque quelconque sur le corps de support, ce qui permet à un concepteur du composant composite de prévoir l'élément de positionnement et de fixation dans une zone intérieure du corps de support, au lieu d'être limité à un bord de celui-ci, de sorte que l'agencement de l'élément de positionnement et de fixation est possible précisément là où les charges ou les forces de cisaillement les plus élevées sont attendues et/ou là où les exigences sont les plus élevées en matière de fixation précise et sans jeu.

En outre, l'« encliquetage » de la languette sur la saillie de positionnement peut être détecté facilement et nettement de manière acoustique, visuelle et haptique lorsqu'elles sont correctement insérées l'une dans l'autre, ce qui permet d'éviter plus facilement un mauvais montage involontaire. De plus, il est possible de vérifier rapidement, facilement et sans aucune aide, le montage correct par un simple coup d'œil sur la languette, de telle sorte qu'une éventuelle erreur de montage peut être aussitôt détectée.

L'élément de positionnement et de fixation est de préférence formé de telle sorte que la languette rebondit automatiquement à partir de l'état dévié pour pousser contre une surface latérale de l'élément de positionnement. La languette s'enclenche ainsi de manière automatique pour pousser contre le côté de la saillie de positionnement et fixer ainsi celle-ci dans la seconde partie d'ouverture. L'élément de positionnement et de fixation et la saillie de positionnement constituent ainsi une liaison à auto-enclenchement. Lors de la réalisation du composant composite, il n'est pas nécessaire à un opérateur de lâcher sa prise, de déplacer une main vers l'élément de positionnement et de fixation et d'appuyer sur la languette avec un doigt ou un outil pour provoquer un encliquetage. L'encliquetage automatique de l'élément de positionnement et de fixation permet donc une fabrication très simple, sans erreur, rapide et ergonomique du composant composite, et permet en outre une automatisation simple.

De préférence, il peut également être prévu d'incliner la languette dans sa position de repos à un certain angle par rapport au plan du corps de support. L'angle peut en particulier être compris dans la plage de 5° à 15°, de manière préférée dans la plage de 8° à 12°, et de manière plus préférée dans la plage de 9,5°à 10,5°.

À l'aide de ladite inclinaison, il est possible d'obtenir que l'« encliquetage » de la languette sur la saillie de positionnement s'effectue plus facilement lorsqu'elles sont insérées correctement l'une dans l'autre : pendant que la saillie de positionnement pousse contre la languette et dévie celle-ci lorsqu'elles sont insérées l'une dans l'autre de telle sorte que l'inclinaison diminue, ou selon l'interprétation, qu'une inclinaison se produit le cas échéant dans la direction opposée, dès que la saillie de positionnement a été complètement insérée dans la seconde partie d'ouverture, la languette peut glisser au-dessus d'un bord de la saillie de positionnement et revient élastiquement dans la position de repos. Cela permet de garantir d'une part que la pointe de la languette ne glisse pas facilement sur le côté de la saillie de positionnement (plus ou moins définie en fonction du frottement) mais revient toujours élastiquement dans la position souhaitée et appuie et fixe ainsi toujours sur le même côté latéral de la saillie de positionnement. En même temps, l'encliquetage rapide assure un retour visuel et haptique nettement perceptible de telle sorte qu'une confirmation claire du montage correct est donnée à l'opérateur.

Il peut également être prévu de former l'élément de positionnement et de fixation au moins dans la zone du pied de la languette avec une partie de collerette qui s'étend verticalement depuis le plan du corps de support, de telle sorte que la languette est décalée par rapport au plan du corps de support. Le décalage du pied de la languette provoqué par la partie de collerette peut être de 1 mm, 2 mm, 3 mm ou plus. Le décalage du pied de la languette provoqué par la partie de collerette est de préférence plus grand que la hauteur de la saillie de positionnement au-dessus de l'enveloppe externe, est de manière préférée plus grand de 0,5 à 3,0 mm, de manière plus préférée de 1,0 à 2,5 mm de plus, de manière encore plus préférée de 1,5 à 2,0 mm.

En déplaçant et en décalant la languette à partir du plan du corps de support, en élevant la position de la jonction de la languette (le pied de la languette) au-delà de ce plan par la formation d'une partie de collerette, la première partie d'ouverture est alors facilement accessible, de telle sorte que la saillie de positionnement peut être facilement engagée dans celle-ci. Cela facilite le positionnement initial de l'enveloppe externe et du corps de support l'un par rapport à l'autre, de telle sorte que le montage en est facilité.

En particulier lorsque la languette est inclinée, comme décrit ci-dessus, il est avantageux que le décalage du pied de languette soit légèrement plus grand que la hauteur de la saillie de positionnement. Cela a pour effet que lorsque la saillie de positionnement est poussée contre la languette et déplacée le long de celle-ci, la languette est seulement déviée en direction de l'horizontale (c'est-à-dire parallèlement à l'élément de support), mais n'est pas repliée au-delà de celle-ci. Il est ainsi possible d'éviter un pliage excessif de la languette et donc d'éviter le risque de fragilisation du matériau. En même temps, l'inclinaison de la languette permet de garantir que la pointe de la languette se trouve, dans la position d'encliquetage (correspondant à la position de repos), de nouveau à une hauteur qui permet une fixation sûre de la saillie de positionnement.

Il est en outre possible de prévoir de former l'élément de positionnement et de fixation au moins dans la zone de la seconde partie d'ouverture avec une partie de collerette qui s'étend verticalement depuis le plan du corps de support, de telle sorte que le bord de la seconde partie d'ouverture est décalé par rapport au plan du corps de support, et est de préférence décalé de telle sorte que le bord de la seconde partie d'ouverture se situe dans un même plan que la pointe de la languette lorsque la languette fixe la saillie de positionnement dans la seconde partie d'ouverture.

Cette mesure permet de s'assurer que les quatre points, au niveau desquels la saillie de positionnement est fixée latéralement, sont tous situés dans un même plan parallèle au plan du corps de support ou de l'enveloppe externe. Cela permet ainsi d'éviter que d'éventuels couples de basculement non souhaités apparaissent.

De préférence, il peut être prévu que la première partie d'ouverture soit formée de manière sensiblement rectangulaire et/ou présente une largeur et/ou une longueur qui soit plus grande d'au moins 0,5 mm, de préférence d'au moins 1,0 mm, qu'un diamètre de la saillie de positionnement.

De cette manière, il est possible de garantir qu'un opérateur peut placer facilement la saillie de positionnement dans la première partie d'ouverture.

De préférence, la languette s'étend sur une longueur comprise entre 10 mm et 30 mm, de manière préférée entre 12 mm et 25 mm, de manière particulièrement préférée entre 15 mm et 20 mm.

De préférence, il peut être en outre prévu que la saillie de positionnement comporte un évidement pour recevoir la pointe de la languette. Lorsque la saillie de positionnement est fixée par la languette dans la seconde partie d'ouverture, la languette coopère avec l'évidement de manière à interdire un mouvement relatif de l'enveloppe externe et du corps de support l'un par rapport à l'autre perpendiculairement au plan d'extension du corps de support ou de l'enveloppe externe dans la zone de l'élément de positionnement et de fixation.

Avec cette configuration, l'élément de positionnement et de fixation assure une fixation en six points, c'est-à-dire également dans la direction (positive et négative) des verticales. De cette manière, le degré de fixation peut encore être augmenté et un ou plusieurs moyens de fixation requis peuvent être omis dans la direction (positive et négative) des verticales.

De préférence, l'élément de positionnement et de fixation est formé de telle sorte que la languette peut être soulevée ou déviée par un opérateur ou un outil, de telle sorte que la languette ne presse plus contre la surface latérale de l'élément de positionnement, et peut être déplacée au moyen d'un mouvement relatif de l'enveloppe externe et du corps de support de la saillie de positionnement, depuis la seconde partie d'ouverture jusque dans la première partie d'ouverture, de telle sorte que l'enveloppe externe et le corps de support peuvent être séparés l'un de l'autre.

Le composant composite peut ainsi être facilement de nouveau décomposé en ses éléments constitutifs, de telle sorte que lorsque le côté visible de l'enveloppe externe est par exemple rayé, seule celle-ci a besoin d'être remplacée, au lieu de remplacer la totalité du composant composite. Cela permet de simplifier une réparation et/ou de la rendre plus économique.

Il peut être prévu que la hauteur à laquelle l'élément de pince fait saillie à partir de l'enveloppe externe, soit sensiblement égale à la hauteur à laquelle la saillie de positionnement fait saillie à partir de l'enveloppe externe, une différence de hauteur étant de préférence inférieure à 1,5 mm, de manière plus préférée inférieure à 1,0 mm et de manière encore plus préférée inférieure à 0,5 mm.

La mesure indiquée permet d'obtenir que l'enveloppe externe et le corps de support soient placés et déplacés de manière simple l'un par rapport à l'autre, de telle sorte qu'un opérateur peut réaliser le montage de manière rapide et sure.

De préférence, l'ouverture d'élément de pince est agencée et dimensionnée de telle sorte que, lorsque l'élément de pince est introduit dans l'ouverture d'élément de pince, la saillie de positionnement se trouve dans la zone de la première partie d'ouverture, de préférence à une distance d'au moins 0,2 mm, de préférence d'au moins 0,5 mm par rapport au bord de la première partie d'ouverture.

Les ouvertures d'élément de pince et l'élément ou les éléments de pince peuvent de cette manière être une sorte d'aide au positionnement, de manière à engager la saillie de positionnement facilement et de façon définie dans la première partie d'ouverture et à la placer par rapport à la languette pour faciliter le montage du composant composite.

Plus avantageusement, au moins une ouverture oblongue peut être formée dans le corps de support et est formée pour recevoir une saillie formée sur l'enveloppe externe, l'ouverture oblongue ayant une largeur qui correspond au diamètre de la saillie.

La combinaison de l'ouverture oblongue et de la saillie offre une fixation supplémentaire en deux points, de manière à interdire un mouvement relatif entre l'enveloppe externe et le corps de support dans une direction orthogonale à la direction longitudinale de l'ouverture oblongue. En particulier dans les composants de plus grande tailles, plusieurs ouvertures oblongues peuvent également être prévues avec des saillies respectivement associées, pour assurer un haut niveau de précision du positionnement sur l'ensemble du composant composite.

Au moins un élément de fixation peut en outre être formé ou agencé sur le corps de support afin de fixer le composant composite sur une partie de véhicule. L'élément ou les éléments de fixation peuvent être formés d'une manière connue en soi comme un ou plusieurs éléments de liaison clipsés, encliquetés ou vissés.

Le composant composite peut être formé comme un élément d'habillage d'un véhicule automobile tel que, par exemple, comme un habillage de longeron, un becquet tel qu'un becquet latéral ou un becquet arrière, un pare-chocs ou une partie de celui-ci, ou une calandre ou une partie de celle-ci.

### Brève description des dessins

Des modes de réalisation de la présente invention vont être décrits en liaison avec les dessins :
la Figure 1 représente schématiquement un composant composite selon un mode de réalisation ;
les Figures 2A à 2C représentent schématiquement un élément de positionnement et de fixation qui coopère avec une saillie de positionnement ;
les Figures 3A à 3C représentent schématiquement la façon dont une saillie de positionnement est engagée et fixée dans un élément de positionnement et de fixation ; et
les Figures 4A et 4B représentent un autre mode de réalisation d'une saillie de positionnement.

### Description détaillée

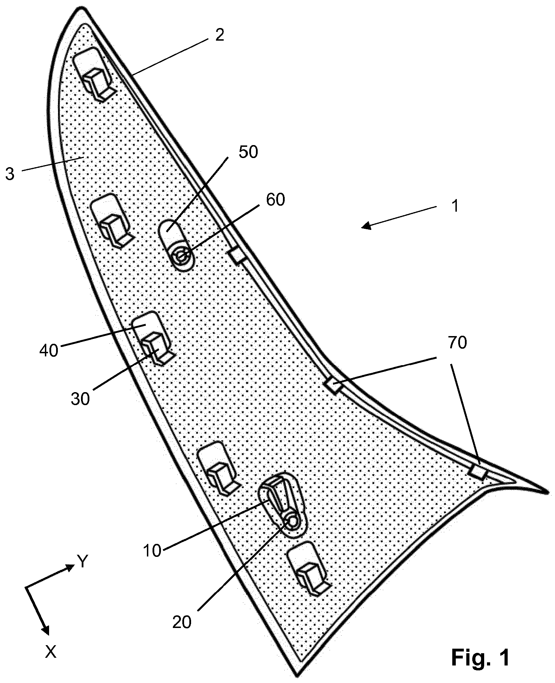

Sur la Figure 1, un mode de réalisation d'un composant composite 1 pour un véhicule automobile est représenté. Le composant composite 1, qui peut par exemple être un becquet latéral tel que représenté, est formé par une enveloppe externe 2 et un corps de support 3 agencé sur la face intérieure de l'enveloppe externe 2. L'enveloppe externe 2 et le corps de support 3 peuvent de préférence être fabriqués par un procédé de moulage par injection de matière plastique.

Pour relier l'enveloppe externe 2 et le corps de support 3 l'un à l'autre et les maintenir fixés l'un à l'autre dans une position et une orientation souhaitées, le corps de support 3 présente un élément de positionnement et de fixation 10 qui coopère avec une saillie de positionnement 20 formée sur l'enveloppe externe 2. L'enveloppe externe 2 et le corps de support 3 peuvent par exemple, comme représenté, être formés comme des composants oblongs, sensiblement plats, qui s'étendent sensiblement dans un plan. Sur la Figure 1, ceci est par exemple représenté en utilisant un système de coordonnées cartésiennes, avec des axes X et Y comme représenté, l'axe Z (non représenté) s'étendant depuis le plan de l'image vers l'observateur. L'axe X et l'axe Y correspondent ainsi au plan d'extension de l'enveloppe externe 2 et du corps de support 3, et l'axe Z correspond à la direction d'épaisseur de ces composants. Dans l'exemple illustré à la Figure 1, l'axe X est en outre parallèle à la direction de montage, c'est-à-dire à la direction dans laquelle l'enveloppe externe 2 et le corps de support 3 peuvent être déplacés l'un par rapport à l'autre pour réaliser le composant composite 1. Le choix du système de coordonnées est cependant non limitatif et il est également possible d'utiliser d'autres systèmes de coordonnées. De la même manière, l'enveloppe externe 2 et le corps de support 3 ne sont pas limités à des composants plats et plans, et peuvent également être formés pour être en tout ou partie pliés, incurvés ou avoir toute autre forme complexe.

Comme également illustré, plusieurs éléments de pince 30 sont formés en différentes positions sur l'enveloppe externe 2 et font respectivement saillie à travers des ouvertures de pinces 40 correspondantes, qui sont formées dans le corps de support 3, pour venir respectivement en prise avec le bord de l'ouverture d'élément de pince 40 de manière à pincer le corps de support 3 entre l'élément de pince 30 et le corps de l'enveloppe externe 2, de manière à interdire un mouvement relatif de l'enveloppe externe 2 et du corps de support 3 perpendiculairement (dans l'exemple de la Figure 1 en direction de l'axe Z positif ou négatif) au plan d'extension (dans l'exemple de la figure, le plan X-Y) du corps de support 3 ou de l'enveloppe externe 2 dans la zone de l'élément de pince 30.

Dans le composant composite 1 illustré à la Figure 1, une ouverture oblongue 50 est en outre formée dans le corps de support 3, ouverture dans laquelle est reçue une saillie 60 formée sur l'enveloppe externe 2. La largeur de l'ouverture oblongue 50 correspond au diamètre de la saillie 60, de telle sorte que l'ouverture oblongue 50 assure une fixation latérale de la saillie 60. Dans l'exemple de la Figure 1, la direction dans la longueur de l'ouverture oblongue 50 correspond à la direction de l'axe X et la direction dans la largeur de l'ouverture oblongue 50 correspond à la direction de l'axe Y. De manière correspondante, l'ouverture oblongue 50 sert à fixer la saillie 50 dans la direction positive et négative de l'axe Y, tandis qu'un mouvement de la saillie 60 dans la direction positive et négative de l'axe X est possible.

Pour une fixation et/ou un guidage supplémentaire, il est en outre possible de prévoir des saillies 70 qui sont agencées sur le bord de l'enveloppe externe 2 et viennent en prise avec le corps de support 3.

Afin de fixer le composant composite 1 sur un véhicule automobile, des éléments de fixation différents non représentés peuvent en outre être prévus sur le corps de support 3, tels que des éléments de liaison clipsés, enfichables ou vissés.

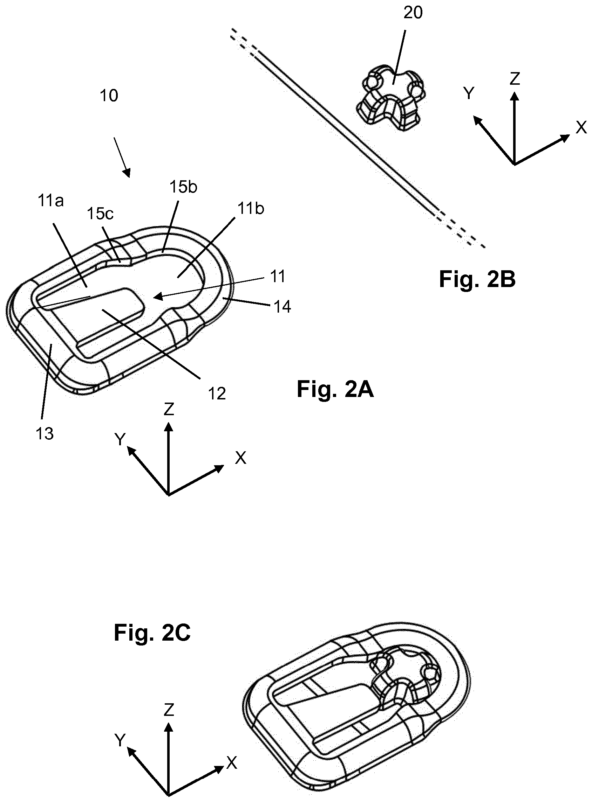

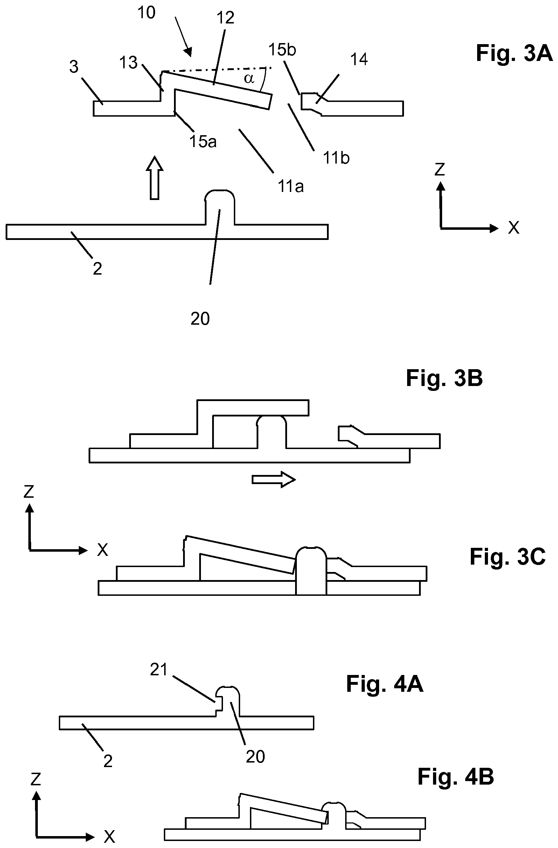

L'élément de positionnement et de fixation 10 et son interaction avec la saillie de positionnement 20 vont maintenant être décrits plus en détail en référence aux Figures 2A à 2C, la Figure 2A illustrant l'élément de positionnement et de fixation 10, la Figure 2B représentant la saillie de positionnement 20 et la Figure 3C illustrant la saillie de positionnement 20 à l'état fixé à travers l'élément de positionnement et de fixation 10.

Comme représenté, l'élément de positionnement et de fixation 10 définit une ouverture 11 comportant une première partie d'ouverture 11a qui sert à introduire la saillie de positionnement 20 et est dimensionnée en correspondance un peu plus grande que la saillie de positionnement 20, et comportant une seconde partie d'ouverture 11b dans laquelle la saillie de positionnement 20 doit être maintenue fixée une fois le montage réalisé. Dans l'exemple illustré sur les figures, la direction dans la longueur de l'ouverture 11, à savoir la direction de la première partie d'ouverture 11a à la seconde partie d'ouverture 11b, est parallèle à l'axe X, et la direction dans la largeur de l'ouverture 11 est parallèle à l'axe Y.

Plus précisément, la saillie de positionnement 20, dans la seconde partie d'ouverture 11b, est maintenue fixée entre une languette 12, qui recouvre la première partie d'ouverture 11a et s'étend dans l'exemple des Figures sensiblement en direction de l'axe X, et un bord 15b, qui délimite et définit la seconde partie d'ouverture 11b, de manière à interdire un déplacement de l'enveloppe externe 2 et du corps de support 3 l'un par rapport à l'autre. En d'autres termes, la saillie de positionnement 20 est maintenue fixée par l'élément de positionnement et de fixation 10 dans la direction des axes X et Y positifs et négatifs.

De préférence, la saillie de positionnement 20 a une circonférence qui a une forme circulaire ou, comme représenté, coïncide au moins par endroits avec une forme circulaire, comme par exemple la forme en croix représentée sur les figures avec une circonférence extérieure circulaire. Cela est particulièrement avantageux car une saillie de positionnement 20 ayant une circonférence arrondie circulaire peut s'insérer et se fixer facilement et de manière ajustée avec les tolérances les plus petites dans une seconde partie d'ouverture 11b formée circulairement de manière correspondante, de manière à garantir un positionnement très précis de l'enveloppe externe 2 et de l'élément de support 3 l'un par rapport à l'autre en direction des axes X et Y. Une rotation de l'enveloppe externe 2 et de l'élément de support 3 autour de la saillie de positionnement 20 est ainsi empêchée par l'ouverture oblongue 60 et la saillie 50 fixée à l'intérieur latéralement, c'est-à-dire dans la direction (positive et négative) de l'axe Y.

L'engagement de la saillie de positionnement 20 dans l'élément de positionnement et de fixation 10 va être expliqué plus en détail en référence aux Figures 3A à 3C.

La Figure 3A représente l'enveloppe externe 2 et le corps de support 3 dans une position espacée l'un de l'autre, correspondant à une situation avant le début de l'assemblage de l'enveloppe externe 2 et du corps de support 3.

Ensuite, l'enveloppe externe 2 et le corps de support 3 sont placés l'un contre l'autre, la saillie de positionnement 20 étant guidée à l'intérieur de la première partie d'ouverture 11a, par un mouvement en direction de l'axe Z, et poussée contre la languette 12, qui s'étend depuis le bord 15a qui délimite et définit la première partie d'ouverture 11a, en direction du bord opposé 15b, de telle sorte que la languette 12 est repliée et déviée depuis sa position de repos (telle que représentée sur la Figure 3A) jusqu'à la réception complète de la saillie de positionnement 20 dans la première partie d'ouverture 11a (telle que représentée sur la Figure 3B).

En déplaçant le corps de support 3 et l'enveloppe externe 2 l'un par rapport à l'autre en direction de l'axe X, la saillie de positionnement 20 peut être déplacée de manière correspondante sous la languette 12 déviée et être déplacée dans la seconde partie d'ouverture 11b. Si la saillie de positionnement 20 est entièrement reçue dans la seconde partie d'ouverture 11b, la pression de la saillie de positionnement 20 contre la languette 12 se relâche et la languette 12 retourne élastiquement dans sa position de repos en raison de l'élasticité inhérente au matériau de la languette, comme représenté sur la Figure 3C. Dans cet état, la pointe de la languette pousse alors latéralement contre la saillie de positionnement 20, ce qui permet de fixer et d'immobiliser la saillie de positionnement 20 entre la languette 12 et le bord 15b. La languette 12 s'encliquète alors automatiquement dans la position de maintien, dans laquelle la languette 12 pousse contre le côté de la saillie de positionnement 12 et fixe ainsi celle-ci dans la seconde partie d'ouverture 11b. L'élément de positionnement et de fixation 10 et la saillie de positionnement 20 établissent ainsi une liaison à auto-enclenchement, et un opérateur doit seulement placer l'enveloppe externe 2 et le corps de support 3 l'un contre l'autre tel que décrit, et les déplacer l'un par rapport à l'autre pour réaliser le composant composite 1. En particulier, il n'est pas nécessaire que l'opérateur, lors de la réalisation du composant composite 1, lâche sa prise, déplace une main vers l'élément de positionnement et de fixation 10 et appuie sur la languette 12 avec un doigt ou un outil, afin d'entraîner un encliquetage. L'encliquetage automatique de l'élément de positionnement et de fixation 10 permet donc une fabrication très simple, sans erreur, rapide et ergonomique du composant composite 1.

La réalisation simple du composant composite 1 par simple juxtaposition et déplacement de l'enveloppe externe 2 et du corps de support 3 l'un par rapport à l'autre rend la réalisation du composant composite 1 également parfaitement adaptée à une production automatisée, dans laquelle la juxtaposition et le déplacement de l'enveloppe externe 2 et du corps de support 3 l'un par rapport à l'autre sont réalisés par des dispositifs correspondants.

Bien que l'encliquetage automatique décrit ci-dessus soit préféré, celui-ci n'est pas limitatif et il est par exemple également possible de prévoir, en fonction des exigences relatives au composant composite 1, qu'un opérateur intervienne manuellement pour assister ou effectuer l'engagement de la languette 12 afin de fixer la saillie de positionnement 20.

Comme illustré sur les Figures, l'élément de positionnement et de fixation 10 est formé de telle sorte que la languette 12 soit facile d'accès. Cela est notamment dû au fait que la languette 12 est surélevée par rapport au plan du corps de support 3 et que la languette 12 est relativement étroite par rapport à la largeur de la première partie d'ouverture 11a. Il est alors facilement possible pour un opérateur, en utilisant un outil tel qu'un levier ou une tige pointue, ou tout simplement avec ses doigts, de se placer sous la languette 12 et de soulever la languette 12, de telle sorte que la languette 12 se détache de la face latérale de la saillie de positionnement 20 et est soulevée au-dessus de celle-ci. La saillie de positionnement 20 est ainsi libérée de sa fixation et peut être à nouveau détachée et éloignée de l'élément de positionnement et de fixation 10. De cette manière, le composant composite 1 peut être démonté pour obtenir les différents composants que sont l'enveloppe externe 2 et le corps de support 3, ce qui permet par exemple de remplacer et d'échanger l'un des deux composants, par exemple dans le cas d'un dommage par rayure de l'enveloppe externe 2.

Comme représenté, la languette 12 est de préférence formée de telle sorte qu'elle soit inclinée à un angle α par rapport au plan X-Y, où l'angle α peut être compris dans la plage de 5° à 15°, de ma nière préférée de 8°à 12°et de manière particulièrement préférée de 9,5°à 10,5°.

Il est également préférable que la languette 12, telle que représentée, soit formée à une petite distance par rapport au plan du corps de support 3, c'est-à-dire, dans l'exemple des Figures, décalée en direction de l'axe Z. Cela est possible en tournant l'élément de positionnement et de fixation 10 au moins dans la zone du pied de la languette 12 avec une partie de collerette 13 qui s'étend verticalement depuis le plan du corps de support 3, de sorte que la languette 12 est décalée par rapport au plan du corps de support.

Sur les côtés de la seconde partie d'ouverture 11b, il est également préféré de former une partie de collerette 14 qui s'étend verticalement depuis le plan du corps de support 3 (dans l'exemple des Figures dans la direction de l'axe Z), de telle sorte que le bord de la seconde partie d'ouverture 11b est décalé par rapport au plan du corps de support 3, et est de préférence décalé de telle sorte que le bord de la seconde partie d'ouverture 11b se situe dans un même plan que la pointe de la languette 12 lorsque la languette 12 fixe la saillie de positionnement 20 dans la seconde partie d'ouverture 11b.

Une autre configuration est illustrée sur les Figures 4A et 4B, dans lesquelles la saillie de positionnement 20 comporte en outre un évidement 21 pour recevoir la pointe de la languette 12 de telle sorte que, lorsque la saillie de positionnement 20 est fixée par la languette 12 dans la seconde partie d'ouverture 11b, la pointe de la languette 12 se situe dans l'évidement 21 et est maintenue fixée par celui-ci. Par cette mesure, la languette 12 peut également assurer une fixation de la saillie de positionnement 20 dans la direction verticale, de manière à interdire un mouvement relatif de l'enveloppe externe 2 et du corps de support 3 l'un par rapport à l'autre, perpendiculairement au plan d'extension (dans l'exemple des Figures, le plan X-Y) du corps de support 3 ou de l'enveloppe externe 2 dans la zone de l'élément de positionnement et de fixation 10.

### Références

- 1: Composant composite
- 2: Enveloppe externe
- 3: Corps de support
- 10: Élément de positionnement et de fixation
- 11: Ouverture
- 11a: Première partie d'ouverture
- 11b: Seconde partie d'ouverture
- 12: Languette
- 13, 14: Parties de collerette
- 15a, 15b: Parties de bord
- 15c: Zone de transition
- 20: Saillie de positionnement
- 21: Évidement
- 30: Élément de pince
- 40: Ouverture d'élément de pince
- 50: Ouverture oblongue
- 60: Saillie
- α: Angle d'inclinaison de la languette

## Revendications

1. Composant composite (1) pour un véhicule automobile, comportant une enveloppe externe (2) et un corps de support (3),
dans lequel un élément de positionnement et de fixation (10) est formé dans le corps de support (3), lequel élément de positionnement et de fixation définit une ouverture (11) avec une première partie d'ouverture (11a) et une seconde partie d'ouverture (11b),
dans lequel l'élément de positionnement et de fixation (10) comporte une languette (12) qui s'étend depuis un bord latéral (15a) de la première partie d'ouverture (11a) en direction de la seconde partie d'ouverture (11b) et recouvre la première partie d'ouverture (11a),
dans lequel la seconde partie d'ouverture (11b) est conçue de telle sorte qu'une saillie de positionnement (20) formée sur l'enveloppe externe (2) peut être positionnée dans la seconde partie d'ouverture (11b), pour y être maintenue et fixée par un bord (15b) de la seconde partie d'ouverture (11b) et la languette (12), de manière à interdire des mouvements relatifs de l'enveloppe externe (2) et du corps de support (3) l'un par rapport à l'autre parallèlement au plan d'extension du corps de support (3) ou de l'enveloppe externe (2) dans la zone de l'élément de positionnement et de fixation (10),
dans lequel la première partie d'ouverture (11a) est formée plus grande que la seconde partie d'ouverture (11b),
dans lequel l'élément de positionnement et de fixation (10) est formé de telle sorte que pour positionner la saillie de positionnement (20) dans la seconde partie d'ouverture (11b), la saillie de positionnement (20) peut d'abord être engagée dans la première partie d'ouverture (11a) pour pousser contre la languette (12) et dévier celle-ci depuis sa position de repos, l'élément de positionnement (20) peut être déplacé au moyen d'un mouvement relatif de l'enveloppe externe (2) et du corps de support (3) en direction de la seconde partie d'ouverture (11b), dans lequel lorsque la saillie de positionnement (20) est complètement déplacée à l'intérieur de la seconde partie d'ouverture (11b) et positionnée dans celle-ci, la languette (12) rebondit au moins partiellement à partir de l'état dévié pour pousser contre une surface latérale de l'élément de positionnement (20) de sorte que l'élément de positionnement est fixé dans la position définie par la languette (12) et le bord (15b) de la seconde partie d'ouverture (11b),
dans lequel une partie de bord (15c) est formée en se rétrécissant dans la largeur d'ouverture dans une zone de transition du bord (15a) de la première partie d'ouverture (11a) vers le bord (15b) de la seconde partie d'ouverture (11b), pour assurer un guidage de la saillie de positionnement (20) dans la seconde partie d'ouverture (11b), et dans lequel au moins un élément de pince (30) est en outre formé sur l'enveloppe externe (2) et est adapté pour être passé à travers une ouverture (40) associée prévue dans le corps de support (3) et, lors du mouvement relatif de l'enveloppe externe (2) et du corps de support (3) pour déplacer la saillie de positionnement (20) de la première partie d'ouverture (11a) à la seconde partie d'ouverture (11b), pour venir en prise avec le bord de l'ouverture d'élément de pince (40), de manière à pincer le corps de support (3) entre l'élément de pince (30) et le corps de l'enveloppe externe (2), de manière à interdire un mouvement relatif de l'enveloppe externe (2) et du corps de support (3) perpendiculairement au plan d'extension du corps de support (3) ou de l'enveloppe externe (2) dans la zone de l'élément de pince (30).

2. Composant composite (1) selon la revendication 1, dans lequel l'élément de positionnement et de fixation (10) est formé de telle sorte que la languette (12) rebondit automatiquement à partir de l'état dévié pour pousser contre une surface latérale de l'élément de positionnement (20).

3. Composant composite (1) selon l'une des revendications précédentes, dans lequel la languette (12) dans sa position de repos est inclinée vis-à-vis du plan du corps de support (3) d'un angle (α), de préférence d'un angle (α) dans la plage de 5° à 15°, de manière plus préférée d'un angle (α) dans la plage de 8° à 12°, de manière particulièrement préférée d'un angle (α) dans la plage de 9,5° à 10,5°.

4. Composant composite (1) selon l'une des revendications précédentes, dans lequel l'élément de positionnement et de fixation (10) est formé dans la zone du pied de la languette (12) avec une partie de collerette (13) qui s'étend verticalement depuis le plan du corps de support (3) de telle sorte que la languette (12) est décalée par rapport au plan du corps de support.

5. Composant composite (1) selon la revendication 4, dans lequel le décalage du pied de la languette (12) provoqué par la partie de collerette (13) est plus grand que la hauteur de la saillie de positionnement (20) à laquelle la saillie de positionnement fait saillie à partir de l'enveloppe externe (2), est de préférence plus grand de 0,5 à 3,0 mm, est de manière plus préférée plus grand de 1,0 à 2,5 mm, est de manière particulièrement préférée plus grand de 1,5 à 2,0 mm.

6. Composant composite (1) selon l'une des revendications précédentes, dans lequel l'élément de positionnement et de fixation (10) est formé au moins dans la zone de la seconde partie d'ouverture (11b) avec une partie de collerette (14) qui s'étend verticalement depuis le plan du corps de support (3) de telle sorte que le bord de la seconde partie d'ouverture (11b) est décalé par rapport au plan du corps de support (3), et est de préférence décalé de telle sorte que le bord de la seconde partie d'ouverture (11b) se situe dans un même plan que la pointe de la languette (12) lorsque la languette (12) fixe la saillie de positionnement (20) dans la seconde partie d'ouverture (11b).

7. Composant composite (1) selon l'une des revendications précédentes, dans lequel la première partie d'ouverture (11a) est formée de manière sensiblement rectangulaire et/ou a une largeur et/ou une longueur qui est plus grande d'au moins 0,5 mm, de préférence d'au moins 1,0 mm, qu'un diamètre de la saillie de positionnement (20).

8. Composant composite (1) selon l'une des revendications précédentes, dans lequel la languette (12) s'étend sur une longueur comprise entre 10 mm et 30 mm, de manière préférée entre 12 mm et 25 mm, de manière particulièrement préférée entre 15 mm et 20 mm.

9. Composant composite (1) selon l'une des revendications précédentes, dans lequel la saillie de positionnement (20) comporte un évidement (21) pour recevoir la pointe de la languette (12), dans lequel lorsque la saillie de positionnement (20) est fixée par la languette (12) dans la seconde partie d'ouverture (11b), la languette (12) coopère avec l'évidement (21) de manière à interdire un mouvement relatif de l'enveloppe externe (2) et du corps de support (3) l'un par rapport à l'autre perpendiculairement au plan d'extension du corps de support (3) ou de l'enveloppe externe (2) dans la zone de l'élément de positionnement et de fixation (10).

10. Composant composite (1) selon l'une des revendications précédentes, dans lequel l'élément de positionnement et de fixation (10) est formé de telle sorte que la languette (12) peut être soulevée ou déviée par un opérateur ou un outil, de telle sorte que la languette (12) ne pousse plus contre la surface latérale de l'élément de positionnement (20) et peut être déplacée au moyen d'un mouvement relatif de l'enveloppe externe (2) et du corps de support (3) de la saillie de positionnement (20) depuis la seconde partie d'ouverture (11b) jusque dans la première partie d'ouverture (11a), de telle sorte que l'enveloppe externe (2) et le corps de support (3) peuvent à nouveau être séparés l'un de l'autre.

11. Composant composite (1) selon l'une des revendications précédentes, dans lequel la hauteur à laquelle l'élément de pince (30) fait saillie à partir de l'enveloppe externe (2) est sensiblement égale à la hauteur à laquelle la saillie de positionnement fait saillie à partir de l'enveloppe externe (2), dans lequel une différence de hauteur est de préférence inférieure à 1,5 mm, de manière plus préférée inférieure à 1,0 mm et de manière particulièrement préférée inférieure à 0,5 mm.

12. Composant composite (1) selon l'une des revendications précédentes, dans lequel l'ouverture d'élément de pince (40) est agencée et dimensionnée de telle sorte que lorsque l'élément de pince (30) est introduit dans l'ouverture d'élément de pince (40), la saillie de positionnement se trouve dans la zone de la première partie d'ouverture (11a), de préférence à une distance d'au moins 0,2 mm, de manière plus préférée d'au moins 0,5 mm par rapport au bord de la première partie d'ouverture (11a).

13. Composant composite (1) selon l'une des revendications précédentes, dans lequel, dans le corps de support (3), au moins une ouverture oblongue (50) est en outre formée pour recevoir une saillie (60) formée sur l'enveloppe externe (2), dans lequel l'ouverture oblongue (50) a une largeur qui correspond au diamètre de la saillie (60).

14. Composant composite (1) selon l'une des revendications précédentes, dans lequel au moins un élément de fixation est en outre formé ou agencé sur le corps de support (3) pour fixer le composant composite (1) sur une partie de véhicule, dans lequel l'élément de fixation est de préférence formé comme un élément de liaison clipsé, enfiché ou vissé.

15. Composant composite (1) selon l'une des revendications précédentes, dans lequel le composant composite est formé comme un élément d'habillage, en particulier comme un habillage de longeron, comme un becquet, en particulier comme un becquet latéral ou un becquet arrière, comme un pare-chocs ou une partie de celui-ci, ou comme une calandre ou une partie de celle-ci.

16. Véhicule automobile, comportant un composant composite (1) selon l'une des revendications précédentes.

## Patentansprüche

1. Verbundbauteil (1) für ein Kraftfahrzeug, aufweisend eine Außenhülle (2) und einen Stützkörper (3),
wobei in dem Tragkörper (3) ein Positionierungs- und Befestigungselement (10) ausgebildet ist, welches eine Öffnung (11) mit einem ersten Öffnungsabschnitt (11a) und einem zweiten Öffnungsabschnitt (11b) definiert,
wobei das Positionierungs- und Befestigungselement (10) eine Zunge (12) aufweist, die sich von einer Seitenkante (15a) des ersten Öffnungsabschnitts (11a) in Richtung des zweiten Öffnungsabschnitts (11b) erstreckt und den ersten Öffnungsabschnitt (11a) abdeckt,
wobei der zweite Öffnungsabschnitt (11b) so gestaltet ist, dass ein an der Außenhülle (2) ausgebildeter Positionierungsvorsprung (20) in dem zweiten Öffnungsabschnitt (11b) positioniert werden kann, dort durch einen Rand (15b) des zweiten Öffnungsabschnitts (11b) und die Zunge (12) gehalten und fixiert werden, um Relativbewegungen der Außenhülle (2) und des Stützkörpers (3) zueinander parallel zur Erstreckungsebene des Stützkörpers (3) oder der Außenhülle (2) im Bereich des Positionierungs- und Befestigungselements (10) zu verhindern, wobei der erste Öffnungsabschnitt (11a) größer als der zweite Öffnungsabschnitt (11b) ausgebildet ist,
wobei das Positionierungs- und Befestigungselement (10) so ausgebildet ist, dass zum Positionieren des Positionierungsvorsprungs (20) in dem zweiten Öffnungsabschnitt (11b) der Positionierungsvorsprung (20) zunächst in den ersten Öffnungsabschnitt (11a) eingreifen kann, um gegen die Zunge (12) zu drücken und sie aus ihrer Ruheposition abzulenken, das Positionierungselement (20) mittels einer Relativbewegung der Außenhülle (2) und des Stützkörpers (3) in Richtung des zweiten Öffnungsabschnitts (11b) bewegt werden kann, wobei, wenn der Positionierungsvorsprung (20) vollständig in den zweiten Öffnungsabschnitt (11b) bewegt und darin positioniert wird, die Zunge (12) zumindest teilweise aus dem abgelenkten Zustand zurückfedert, um gegen eine Seitenfläche des Positionierungselements (20) zu drücken, so dass das Positionierungselement in der durch die Zunge (12) und den Rand (15b) des zweiten Öffnungsabschnitts (11b) definierten Position fixiert ist,
wobei ein Kantenabschnitt (15c) durch Verengung der Öffnungsbreite in einem Übergangsbereich von der Kante (15a) des ersten Öffnungsabschnitts (11a) zu der Kante (15b) des zweiten Öffnungsabschnitts (11b) gebildet wird, um eine Führung des Positionierungsvorsprungs (20) in dem zweiten Öffnungsabschnitt (11b) bereitzustellen, und
wobei mindestens ein Klammerelement (30) ferner an der Außenhülle (2) ausgebildet ist und dazu ausgelegt ist, durch eine zugehörige Öffnung (40), die in dem Stützkörper (3) vorgesehen ist, geführt zu werden und bei einer Relativbewegung der Außenhülle (2) und des Stützkörpers (3) den Positionierungsvorsprung (20) von dem ersten Öffnungsabschnitt (11a) zu dem zweiten Öffnungsabschnitt (11b) zu bewegen, zum Eingreifen in den Rand der Klammerelementöffnung (40), um den Stützkörper (3) zwischen dem Klammerelement (30) und der Außenhülle (2) so einzuklemmen, dass eine Relativbewegung der Außenhülle (2) und des Stützkörpers (3) senkrecht zur Erstreckungsebene des Stützkörpers (3) oder der Außenhülle (2) im Bereich des Klammerelements (30) verhindert wird.

2. Verbundbauteil (1) nach Anspruch 1, wobei das Positionierungs- und Befestigungselement (10) so ausgebildet ist, dass die Zunge (12) automatisch aus dem gebogenen Zustand zurückfedert, um gegen eine Seitenfläche des Positionierungselements (20) zu drücken.

3. Verbundbauteil (1) nach einem der vorstehenden Ansprüche, bei dem die Zunge (12) in ihrer Ruhestellung gegenüber der Ebene des Stützkörpers (3) um einen Winkel (α) geneigt ist, vorzugsweise um einen Winkel (α) im Bereich von 5° bis 15°, besonders bevorzugt um einen Winkel (α) im Bereich von 8° bis 12°, besonders bevorzugt um einen Winkel (α) im Bereich von 9,5° bis 10,5°.

4. Verbundbauteil (1) nach einem der vorstehenden Ansprüche, bei dem das Positionierungs- und Befestigungselement (10) im Bereich des Fußes der Zunge (12) mit einem Flanschteil (13) ausgebildet ist, das sich senkrecht aus der Ebene des Stützkörpers (3) derart erstreckt, dass die Zunge (12) gegenüber der Ebene des Stützkörpers versetzt ist.

5. Verbundbauteil (1) nach Anspruch 4, **dadurch gekennzeichnet, dass** der durch das Flanschteil (13) verursachte Versatz des Fußes der Zunge (12) größer ist als die Höhe des Positioniervorsprungs (20), an dem der Positioniervorsprung aus der Außenhülle (2) herausragt, vorzugsweise um 0,5 bis 3,0 mm größer ist, bevorzugter um 1,0 bis 2,5 mm größer ist, besonders bevorzugt um 1,5 bis 2,0 mm größer ist.

6. Verbundbauteil (1) nach einem der vorstehenden Ansprüche, wobei das Positionier- und Befestigungselement (10) zumindest im Bereich des zweiten Öffnungsabschnitts (11b) mit einem Flanschabschnitt (14) ausgebildet ist, der sich senkrecht aus der Ebene des Tragkörpers (3) derart erstreckt, dass der Rand des zweiten Öffnungsabschnitts (11b) gegenüber der Ebene des Tragkörpers (3) versetzt ist, und vorzugsweise so versetzt ist, dass die Kante des zweiten Öffnungsabschnitts (11b) in der gleichen Ebene liegt wie die Spitze der Zunge (12), wenn die Zunge (12) den Positionierungsvorsprung (20) im zweiten Öffnungsabschnitt (11b) fixiert.

7. Verbundbauteil (1) nach einem der vorstehenden Ansprüche, wobei der erste Öffnungsabschnitt (11a) im Wesentlichen rechteckig ausgebildet ist und/oder eine Breite und/oder Länge aufweist, die mindestens 0,5 mm, vorzugsweise mindestens 1,0 mm, größer als ein Durchmesser des Positionierungsvorsprungs (20) ist.

8. Verbundbauteil (1) nach einem der vorstehenden Ansprüche, bei dem sich die Zunge (12) über eine Länge zwischen 10 mm und 30 mm, vorzugsweise zwischen 12 mm und 25 mm, besonders bevorzugt zwischen 15 mm und 20 mm, erstreckt.

9. Verbundbauteil (1) nach einem der vorstehenden Ansprüche, wobei der Positionierungsvorsprung (20) eine Ausnehmung (21) zur Aufnahme der Spitze der Zunge (12) aufweist, wobei, wenn der Positionierungsvorsprung (20) durch die Zunge (12) im zweiten Öffnungsabschnitt (11b) fixiert ist, die Zunge (12) mit der Ausnehmung (21) derart zusammenwirkt, dass eine Relativbewegung der Außenhülle (2) und des Stützkörpers (3) relativ zueinander senkrecht zur Erstreckungsebene des Stützkörpers (3) oder der Außenhülle (2) im Bereich des Positionier- und Befestigungselements (10) verhindert wird.

10. Verbundbauteil (1) nach einem der vorstehenden Ansprüche, bei dem das Positionierungs- und Befestigungselement (10) so ausgebildet ist, dass die Zunge (12) durch einen Bediener oder ein Werkzeug angehoben oder abgelenkt werden kann, derart, dass die Zunge (12) nicht mehr gegen die Mantelfläche des Positionierelements (20) drückt und durch eine Relativbewegung der Außenhülle (2) und des Stützkörpers (3) des Positioniervorsprungs (20) vom zweiten Öffnungsabschnitt (11b) in den ersten Öffnungsabschnitt (11a) bewegbar ist, so dass die Außenhülle (2) und der Stützkörper (3) wieder voneinander getrennt werden können.

11. Verbundbauteil (1) nach einem der vorstehenden Ansprüche, wobei die Höhe, in der das Klammerelement (30) aus der Außenhülle (2) herausragt, im Wesentlichen gleich der Höhe ist, in der der Positioniervorsprung aus der Außenhülle (2) herausragt, wobei ein Höhenunterschied vorzugsweise weniger als 1,5 mm, besonders bevorzugt weniger als 1,0 mm und besonders bevorzugt weniger als 0,5 mm beträgt.

12. Verbundbauteil (1) nach einem der vorstehenden Ansprüche, wobei die Öffnung (40) des Klammerelements so angeordnet und dimensioniert ist, dass, wenn das Klammerelement (30) in die Öffnung (40) des Klammerelements eingeführt wird, der Positioniervorsprung im Bereich des ersten Öffnungsabschnitts (11a), vorzugsweise in einem Abstand von mindestens 0,2 mm, besonders bevorzugt mindestens 0,5 mm, von der Kante des ersten Öffnungsabschnitts (11a) angeordnet ist.

13. Verbundbauteil (1) nach einem der vorstehenden Ansprüche, wobei in dem Stützkörper (3) mindestens eine längliche Öffnung (50) weiter ausgebildet ist, um einen an der Außenhülle (2) ausgebildeten Vorsprung (60) aufzunehmen, wobei die längliche Öffnung (50) eine Breite aufweist, die dem Durchmesser des Vorsprungs (60) entspricht.

14. Verbundbauteil (1) nach einem der vorstehenden Ansprüche, wobei ferner an dem Trägerkörper (3) mindestens ein Befestigungselement zur Befestigung des Verbundbauteils (1) an einem Fahrzeugteil ausgebildet oder angeordnet ist, wobei das Befestigungselement vorzugsweise als geclipstes, gestecktes oder geschraubtes Verbindungselement ausgebildet ist.

15. Verbundbauteil (1) nach einem der vorstehenden Ansprüche, wobei das Verbundbauteil als Verkleidungselement, insbesondere als Holmverkleidung, als Spoiler, insbesondere als Seitenspoiler oder Heckspoiler, als Stoßfänger oder Teil davon, oder als Gitter oder Teil davon ausgebildet ist.

16. Kraftfahrzeug mit einem Verbundbauteil (1) gemäß einem der vorstehenden Ansprüche.

## Claims

1. Composite component (1) for a motor vehicle, comprising an outer casing (2) and a support body (3),
wherein a positioning and fixing element (10) is positioned in the support body (3), said positioning and fixing element defining an opening (11) with a first opening portion (11a) and a second opening portion (11b),
wherein the positioning and fixing element (10) has a tab (12) that extends from a side edge (15a) of the first opening portion (11a) towards the second opening portion (11b) and covers the first opening portion (11a),
wherein the second opening portion (11b) is designed such that a positioning protrusion (20) formed on the outer casing (2) may be positioned in the second opening portion (11b), to be held and fixed therein by an edge (15b) of the second opening portion (11b) and the tab (12), so as to prevent relative movements of the outer casing (2) and of the support body (3) with respect to one another parallel to the extension plane of the support body (3) or of the outer casing (2) in the area of the positioning and fixing element (10),
wherein the first opening portion (11a) is made larger than the second opening portion (11b),
wherein the positioning and fixing element (10) is formed such that to position the positioning protrusion (20) in the second opening portion (11b), the positioning protrusion (20) may first be engaged in the first opening portion (11a) to push against the tab (12) and deflect the latter from the rest position thereof, the positioning element (20) may be moved by means of a relative movement of the outer casing (2) and the support body (3) towards the second opening portion (11b), wherein when the positioning protrusion (20) is completely moved into the second opening portion (11b) and positioned therein, the tab (12) rebounds at least partially from the deflected state to push against a side surface of the positioning element (20) so that the positioning element is fixed in the position defined by the tab (12) and the edge (15b) of the second opening portion (11b),
wherein an edge portion (15c) is formed by a narrowing in the opening width in a transition area of the edge (15a) of the first opening portion (11a) toward the edge (15b) of the second opening portion (11b), for guiding the positioning protrusion (20) in the second opening portion (11b), and
wherein at least one clamping element (30) is further positioned on the outer casing (2) and is adapted to pass through an associated opening (40) provided in the support body (3) and, upon the relative movement of the outer casing (2) and of the support body (3) to move the positioning protrusion (20) from the first opening portion (11a) to the second opening portion (11b), to engage the edge of the clamping element opening (40), so as to clamp the support body (3) between the clamping element (30) and the body of the outer casing (2) to prevent a relative movement of the outer casing (2) and of the support body (3) perpendicular to the extension plane of the support body (3) or of the outer casing (2) in the area of the clamping element (30).

2. Composite component (1) according to claim 1, wherein the positioning and fixing element (10) is formed such that the tab (12) automatically rebounds from the deflected state to push against a side surface of the positioning element (20).

3. Composite component (1) according to one of the preceding claims, wherein the tab (12) in its rest position is inclined with respect to the plane of the support body (3) by an angle (α), preferably an angle (α) in the range of 5° to 15°, more preferably an angle (α) in the range of 8° to 12°, particularly preferably an angle (α) in the range of 9.5° to 10.5°.

4. Composite component (1) according to one of the preceding claims, wherein the positioning and fixing element (10) is located in the area around the foot of the tab (12) with a flange portion (13) extending vertically from the plane of the support body (3) such that the tab (12) is offset from the plane of the support body.

5. Composite component (1) according to claim 4, wherein the offset of the foot of the tab (12) caused by the flange portion (13) is greater than the height of the positioning protrusion (20) at which the positioning protrusion protrudes from the outer casing (2), is preferably 0.5 to 3.0 mm greater, is more preferably 1.0 to 2.5 mm greater and is particularly preferably 1.5 to 2.0 mm greater.

6. Composite component (1) according to one of the preceding claims, wherein the positioning and fixing element (10) is formed at least in the area of the second opening portion (11b) with a flange portion (14) extending vertically from the plane of the support body (3) such that the edge of the second opening portion (11b) is offset from the plane of the support body (3), and is preferably offset so that the edge of the second opening portion (11b) is in the same plane as the tip of the tab (12) when the tab (12) fixes the positioning protrusion (20) in the second opening portion (11b).

7. Composite component (1) according to one of the preceding claims, wherein the first opening portion (11a) is formed to be substantially rectangular and/or has a width and/or a length which is greater by at least 0.5 mm, preferably by at least 1.0 mm, than a diameter of the positioning protrusion (20).

8. Composite component (1) according to one of the preceding claims, wherein the tab (12) has a length of between 10 mm and 30 mm, preferably between 12 mm and 25 mm, particularly preferably between 15 mm and 20 mm.

9. Composite component (1) according to one of the preceding claims, wherein the positioning protrusion (20) has a recess (21) to receive the tip of the tab (12), wherein when the positioning protrusion (20) is fixed by the tab (12) in the second opening portion (11b), the tab (12) cooperates with the recess (21) so as to prevent relative movement of the outer casing (2) and of the support body (3) with respect to one another perpendicular to the extension plane of the support body (3) or of the outer casing (2) in the area of the positioning and fixing element (10).

10. Composite component (1) according to one of the preceding claims, wherein the positioning and fixing element (10) is formed such that the tab (12) may be lifted or deflected by an operator or a tool, such that the tab (12) no longer pushes against the side surface of the positioning element (20) and may be moved by means of a relative movement of the outer casing (2) and the support body (3) of the positioning protrusion (20) from the second opening portion (11b) to the first opening portion (11a), so that the outer casing (2) and the support body (3) may again be separated from each other.

11. Composite component (1) according to one of the preceding claims, wherein the height at which the clamping element (30) protrudes from the outer casing (2) is substantially equal to the height at which the positioning protrusion protrudes from the outer casing (2), wherein a height difference is preferably less than 1.5 mm, more preferably less than 1.0 mm and particularly preferably less than 0.5 mm.

12. Composite component (1) according to one of the preceding claims, wherein the clamping element opening (40) is arranged and dimensioned such that when the clamping element (30) is inserted into the clamping element opening (40), the positioning protrusion is in the area of the first opening portion (11a), preferably at a distance of at least 0.2 mm, more preferably at least 0.5 mm from the edge of the first opening portion (11a).

13. Composite component (1) according to one of the preceding claims, wherein in the support body (3) at least one oblong opening (50) is further formed to receive a protrusion (60) formed on the outer casing (2), wherein the width of the oblong opening (50) corresponds to the diameter of the protrusion (60).

14. Composite component (1) according to one of the preceding claims, wherein at least one fixing element is further formed or arranged on the support body (3) to fix the composite component (1) to a vehicle part, wherein the fixing element is preferably formed as a snap-on, plug-in or screw connection element.

15. Composite component (1) according to one of the preceding claims, wherein the composite component is formed as a covering element, in particular as a side rail element covering, such as a spoiler, in particular as a side spoiler or a rear spoiler, as a bumper or portion thereof, or as a grille or portion thereof.

16. Motor vehicle comprising a composite component (1) according to one of the preceding claims.
